# EUROPEAN PATENT SPECIFICATION

(11) **EP 3 855 079 B1**
(45) Date of publication and mention of the grant of the patent: **22.03.2023**
(21) Application number: 21152641.3
(22) Date of filing: 21.01.2021
(51) Int. Cl.: F24D 10/00, F24D 19/10, G06Q 50/06

(54) **METHOD FOR CONTROLLING HEAT DELIVERY IN DISTRIBUTION NETWORK**
VERFAHREN ZUR STEUERUNG DER WÄRMEZUFUHR IN EINEM VERTEILUNGSNETZ
PROCÉDÉ DE COMMANDE DE DISTRIBUTION DE CHALEUR DANS UN RÉSEAU DE DISTRIBUTION

(30) Priority: 27.01.2020 FI 20205078
(43) Date of publication of application: 28.07.2021
(73) Proprietor: Planora Oy, 90401 Oulu (FI)
(72) Inventor: Teppo, Esa, 90401 Oulu (FI)
(74) Representative: Kolster Oy Ab

(56) References cited:
- WO-A1-01/79761
- WO-A1-2007/136344
- WO-A1-2012/038194
- CN-A- 104 573 851
- CN-A- 110 263 966

## Description

### Field

The exemplary and non-limiting embodiments of the invention relate generally to heat distribution systems for delivering heat from a heat plant to sites such as buildings. Embodiments of the invention relate particularly to controlling heat delivery in such a system.

### Background

In many countries, district heating is used for distributing heat from a heat generator to a number of sites including residential and commercial buildings, for example. The heat may be obtained by burning fuel such as fossil fuels or biomass, but it can be generated by using heat pumps, geothermal heating, solar heating, etc. A heat delivery system distributes the generated heat to customers via a network of insulated pipes. The heat may be delivered via pressurized hot water or steam. Heat substations may be provided in the heat delivery system to transfer the heat from one delivery network to, for example, a central heating system of a dwelling. The central heating system may include several valves that control the heat distribution in the dwelling, e.g. in each room of an apartment. In addition to the room-level control, the heat delivery system may include several control points where the heat delivery is controlled, such as a heat distribution centre of a real estate, a substation between the heat distribution centre and the heat generator, and the heat generator itself.

CN 110 263 966 discloses an electric-thermal integrated energy system optimization scheduling method considering a dynamic heat transfer process. The method comprises the following steps that a thermal energy transportation quasi-dynamic model and a primary heat supply network model are constructed, and the thermal energy transportation quasi-dynamic model takes into account the virtual energy storage characteristic of a heat supply network and the thermal energy cross-time transfer to give play to the complementary characteristic between an electric system and a thermal system; an electric-thermal IES optimized scheduling module considering a dynamic heat transfer process is constructed, and an objective function and constraint conditions of the scheduling model are obtained; the influence of heat storage of the heat supply network is obtained on the economy of the comprehensive energy system; a response mechanism of the heat supply network charging and discharging energy to the time-of-use electricity price is obtained; and after the response of the heat supply network energy storage to the time-of-use electricity price is considered, an energy equipment scheduling scheme is generated. According to the method, the dynamic process of heat energy transportation in the heat pipeline can be embodied, the method better conforms to reality compared with a static model, and dynamic characteristics such as delay and virtual energy storage of a heat supply network can be embodied.

WO 2012/038194 discloses an intelligent electronic control and communications interface module for a thermal energy storage module comprising means for bi-directionally communicating data between a thermal energy storage module and a smart grid, wherein said data comprise data concerning the current status of the storage capacity, and requests to store thermal energy or to discharge thermal energy. The disclosure relates also to a thermal energy storage module comprising such intelligent electronic control and communications interface module. Additionallly, the present invention relates to a thermal energy storage module grid. Further, the present invention relates to a method of doing business comprising treating stored thermal energy, thermal energy storage capacity, and/or control priority thereof as a quantifiable tradable asset.

A thesis by Salo S: "Predictive Demand-side Management in District Heating and Cooling Connected Buildings", Aalto University School of Engineering, 5 September 2016, Espoo Finland, published as XP055896105, discloses a model which applies the thermal capacity of District Heating and Cooling (DHC) connected buildings as thermal energy storages. An artificial District Heating system with variable production costs was developed for the model in order to form dynamic price signals. The data used in this study consists of hourly measured indoor and outdoor temperatures, hourly posted heating consumption, accurate weather forecasts, and social behaviour of the occupants. As the framework of predictive demand-side management (DSM), smart DHC grids, and data utilization is extensive, the thesis focuses on the technical constraints and issues on how DSM could be put into practice by the utilization of buildings as short-term energy storage.

### Summary

The invention is defined by the independent claims. The invention differs from the prior art in that three controllers at different levels of the heat distribution network generate individual heat storage capacity profiles of their branch and transmit it to a server computer.

Some embodiments of the invention are defined in the dependent claims.

The embodiments and features, if any, described in this specification that do not fall under the scope of the independent claims are to be interpreted as examples useful for understanding various embodiments of the invention. Some aspects of the disclosure are defined by the independent claims.

### List of drawings

Embodiments of the present invention are described below, by way of example only, with reference to the accompanying drawings, in which
Figure 1 illustrates an example of a heat delivery system where some embodiments of the invention may be applied;
Figure 2 illustrates an embodiment of a process for controlling heat flow in the system of Figure 1;
Figure 3 illustrates the heat flow control in the system of Figure 1 in greater detail;
Figure 4 illustrates a flow diagram of a process for proactive heat flow control according to an embodiment;
Figures 5A to 5C illustrate embodiments of information uploaded to a server computer and information downloaded from the server computer for the heat flow control; and
Figure 6 illustrates a block diagram of an apparatus implementing embodiments of the invention.

### Description of some embodiments

The following embodiments are only examples. Although the specification may refer to "an", "one", or "some" embodiment(s) in several locations, this does not necessarily mean that each such reference is to the same embodiment(s), or that the feature only applies to a single embodiment. Single features of different embodiments may also be combined to provide other embodiments. Furthermore, words "comprising" and "including" should be understood as not limiting the described embodiments to consist of only those features that have been mentioned and such embodiments may also contain also features, structures, units, modules etc. that have not been specifically mentioned.

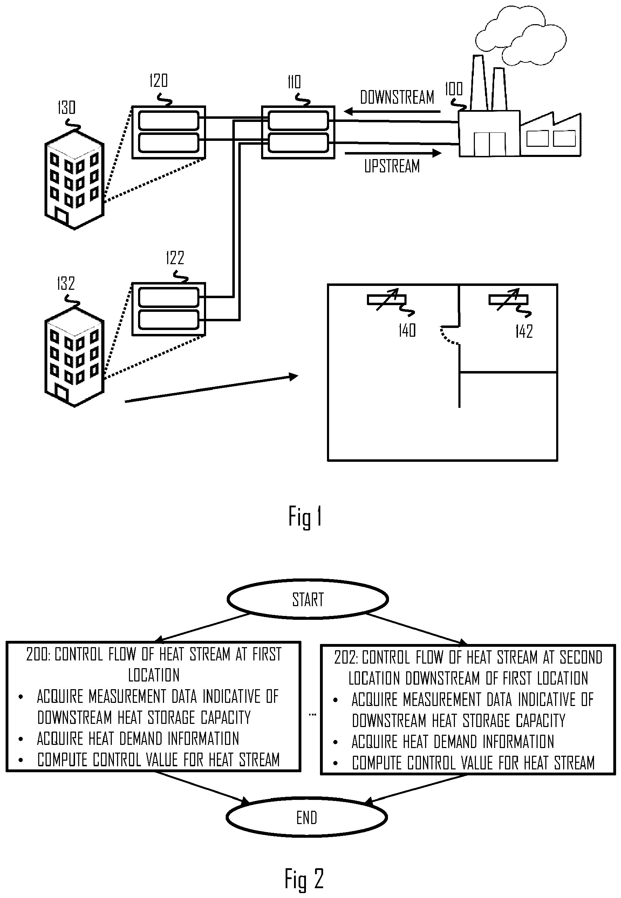

Figure 1 illustrates a diagram of a conventional district heating system, comprising a heat generator 100 in the form of a heating plant. As described in Background, the heat generator may generate heat by burning fuel or by using heat pumps, geothermal heating etc. The heat generator may heat water, liquid, steam or another heat transmission medium that is then output to a heat distribution network through one or more pipes. The outlet of the heat transmission medium through the pipes may be called a heat flow or a heat stream. The heat distribution network may include regional substations 110 that distribute the heat flow to various locations where sites-to-be-heated or customers are located. The sites may include various residential, commercial, etc. buildings 130, 132, real estates, or other premises that are commonly heated. Each site may be equipped with a local heat distribution centre 120, 122 that controls heat delivery locally, e.g. within a building. Within each building, there may be apartment-based and/or room-based heat flow controllers 140, 142 to meet a preset temperature targets, thus controlling the room temperatures inside the building. The number of controllers 140, 142 may be hundreds or thousands per heat distribution centre. The number of heat distribution centres 120, 122 per regional substation or per heat generator may be dozens, hundreds, or thousands.

In Figure 1, concepts of downstream and upstream are also illustrated. Downstream refers to the direction in which the heat flow is controlled, i.e. towards the sites that are heated. Accordingly, the heat distribution centres 120 and 122 are downstream with respect to the substation 110 and the heat generator 100, while the heat generator 100 is upstream with respect to the other elements 110 to 122. Since the heat transmission medium is liquid or steam, there are typically return pipes that close the system and bring the liquid back to the heat generator for reheating. In the return pipes, even the downstream steam cools to a liquid form for the upstream.

Figure 2 illustrates a flow diagram of a process for controlling the heat flow in the system of Figure 1 or in a similar system. Referring to Figure 2, the process comprises: controlling (block 200) flow of the heat stream at a first location of a heat distribution network by acquiring measurement data indicative of a first heat storage capacity profile of the heat distribution network downstream from the first location, by acquiring information on a first heat demand of the heat distribution network downstream from the first location, and by employing the first heat storage capacity profile when controlling the flow of the heat stream to meet the first heat demand; and controlling (block 202) flow of the heat stream at a second location of the heat distribution network, downstream of the first location, by acquiring measurement data indicative of a second heat storage capacity profile of the heat distribution network downstream from the second location, by acquiring information on a second heat demand of the heat distribution network downstream from the second location, and by employing the second heat storage capacity profile when controlling the flow of the heat stream to meet the second heat demand.

Blocks 200 and 202 may be executed in parallel and substantially concurrently, and the control decisions may be made autonomously in each block 200 and 202 autonomously. A similar process may be performed in parallel in one or more other locations of the heat delivery system, as described below. The embodiment of Figure 2 utilizes the capability of the buildings, infrastructure of the heat distribution network etc. to store heat in the heat flow control. By taking into account the thermal storage capabilities of the surrounding structures at various locations along the heat distribution network, efficient heating can be achieved and costs of the heating may be reduced.

Provision of the heat flow control employing the downstream heat storage capacity profiles on multiple layers of the heat distribution network provides advantages. Let us assume that the heat flow control would be carried out in a single location, e.g. in the heat distribution centre 120 or 122 of a building, in the substation, or in the room. By performing the heat flow control only in the room, the heat storage capabilities of the other elements of the heat distribution network upstream from the room are unused. By performing the heat flow control only in the heat distribution centre or in the substation, it may be difficult to build an accurate heat storage capacity profile for individual rooms or buildings and, thus, the heat flow control is less efficient.

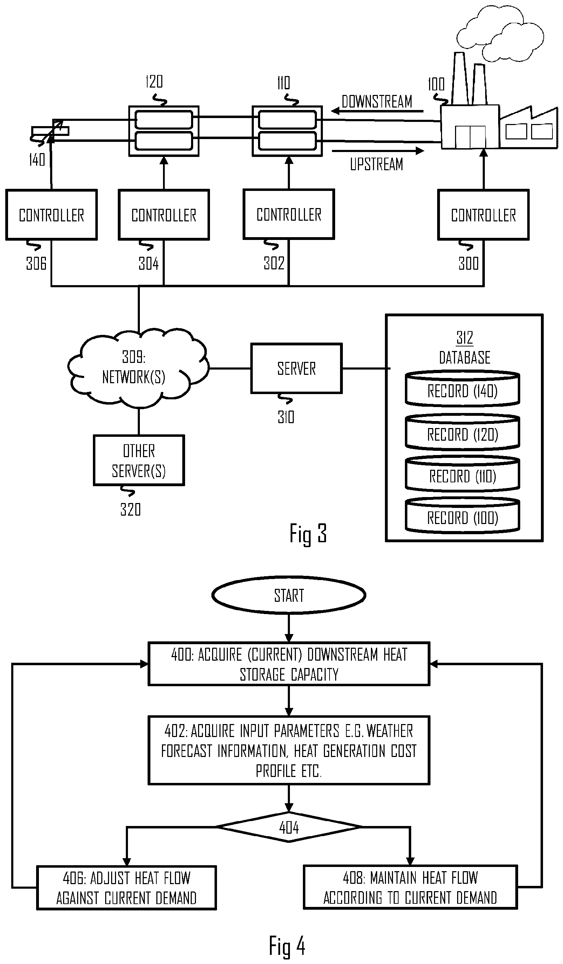

Figure 3 illustrates the system of Figure 1 with a heat flow control system according to an embodiment of Figure 2. The heat flow control system may include a first controller implementing block 200 and a second controller implementing block 202. Referring to Figure 3, the first controller may be any one of the controllers 300 to 304 while the second controller may be any one of the controllers 302 to 306, subject to that the second controller is downstream from the first controller. In the embodiment of Figure 3, a separate controller is provided at each heat flow controller of Figure 1, that is the room-based controller 140, the heat distribution centre 120, the substation 110 and the heat generator 100. A controller 300 controls the heat outlet and/or heat generation in the heat generator 100, the controller 302 controls the heat outlet in the substation 110, the controller 304 controls the heat outlet at the heat distribution centre 120, and the controller 304 controls the heat outlet in a room. Each controller may be disposed at the respective location or, equivalently, the controller may be disposed in a server computer 310 that has access to the units 100 to 140 via one or more networks 309, optionally including the Internet.

There may be a substantially higher number of controllers in the heat flow control system, and the controllers may form a tree-type network. For a single controller 300 at the heat generator, there may be zero to multiple controllers 302 at the substations, dozens or hundreds or even thousands of controllers 304 at the heat distributions centres of various sites, and again dozens or hundreds or even thousands of room-based controllers 306 in each site. In this manner, the number of controllers may increase exponentially on the way downstream in the heat flow control system.

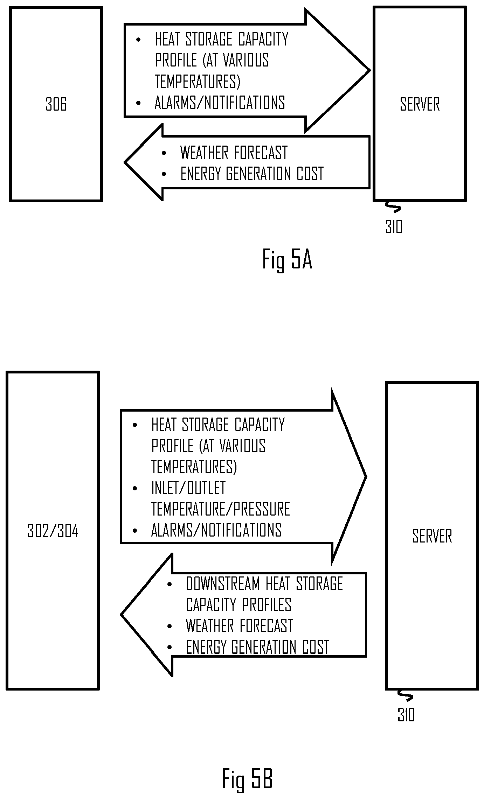

In addition to the performing the control, the controllers 300 to 306 may be responsible of acquiring the measurement data from the locations. One or more sensors may be disposed at the locations and configured to measure parameters that enable the generation of the heat storage capacity profiles. The controllers 300 to 306 may then acquire the measurement data and transmit the measurement data to the server computer 310. Alternatively, or additionally, the controllers 300 to 306 may generate the heat storage capacity profile on the basis of the measurement data and transmit the profile to the server computer. The server computer 310 may store a database 312 that comprises a record for each measurement location 100 to 140. The respective records are then accessible not only to the controller controlling the location but also to the other controllers. This is described in greater detail below with reference to Figures 5A to 5C.

As described below, information on current or predicted future conditions at the locations may be used for controlling heat flow. Such information may be acquired from other one or more servers 320 over the network and stored in the database 312. Such other information may include weather forecasts, heat generation cost profiles, etc.

The measurement data may be acquired over a long time period such that a long-term heat storage capacity profile can be generated. This enables also updating of the heat storage capacity profile over time. The profile may change in response to the changes in the customer behaviour, changes in the building structures etc. The measurement data may be acquired at various values and ranges of an external temperature, e.g. the outside temperature, thus providing knowledge of the heat storage behaviour at various temperatures. The measurements may be synchronized with the heat flow control actions such that it is possible to estimate the response to the control actions downstream of the control location. Also, certain delays in the response to the control actions may be taken into account. For example, the room temperature may be measured over a time when the outside conditions such as the outside temperature changes and when heat flow control actions are performed by the controller 306. Accordingly, a pattern in the response to the control actions can be formed and included in the heat storage capacity profile. The same applies to the other locations 100, 110, 120 and respective controllers 300 to 304.

The heat flow is conventionally controlled on the basis of a heat demand from downstream heat flow controllers. When a target temperature is raised in a room, a controller of a heater in the room raises heat flow to meet the target temperature. This causes an increased heat demand at the heat distribution centre where the heat flow is also raised. In this manner, the increased heat demand is delivered upstream to the substation 110 and the heat generator 100. Such a conventional approach is responsive to the actual heat demand and, thus, operates with a delay. Additionally, when outside temperatures drop and heat demand increases, the cost of generating the heat also increases. Such a delay results in heat generation when the cost is high.

In some embodiments, the controllers are configured to predict changes in the heat demand beforehand and to proactively perform the heat flow control against the current demand, thus employing the heat storage capacities as a heat reserve. In an embodiment, at least one of the controllers 300 to 306 is configured to predict decrease in the heat demand and to reduce the flow of the heat stream in response to the predicted decrease before the heat demand actually decreases. In another embodiment, at least one of the controllers 300 to 306 is configured to predict increase in the heat demand and to increase the flow of the heat stream in response to the predicted increase before the heat demand actually increases. The prediction may be based on weather forecast information, a measured heat demand profile downstream from the location of the at least one controller, etc. The weather forecast information may comprise at least outside temperature values. If the weather forecast information indicates a decrease in the outside temperature, increase in the heat demand may be predicted. Accordingly, the controller(s) may increase the heat flow to pump more heat into the downstream heat storages before the heat demand from downstream actually increases. If the weather forecast information indicates decrease in the outside temperature, a decrease in the heat demand may be predicted. As a consequence, the controller(s) may decrease the heat flow beforehand such that the heat storages may empty their heat reserves between the decrease and the realization of the actual decrease in the heat demand. Increase/decrease of the heat flow may be implemented by controlling one or both of flow and temperature of the heat transmission medium (e.g. water or steam) at the location of each controller. Some controllers may control one of the parameters while other controllers may control both.

Figure 4 illustrates an embodiment of a process for proactively adjusting the heat flow before a change in the heat demand. The process of Figure 4 may be carried out in any one or more of the controllers 300 to 306. The process is preferably carried out in at least two or at least three of the controllers 300 to 306 to fully exploit the benefits of the heat storage capacity of the whole heat distribution network. Referring to Figure 4, the process comprises acquiring the downstream heat storage capacity (block 400). The capacity may be extracted from the heat storage capacity profile that may define the heat storage capacity at various conditions, e.g. at various outside temperatures. Accordingly, the acquisition in block 400 may be based first determining the current conditions and retrieving the heat storage capacity mapped to the determined conditions. The heat storage capacity may be extracted from the records 100 to 140, and/or it may be measured, e.g. as described below. Upon acquiring the downstream heat storage capacity, other input parameters affecting the heat flow control are acquired in block 402. Such other parameters may include at least one of the following: weather forecast information, heat generation cost, etc. The heat generation cost may be represented in a form of a cost for different heat generation methods, e.g. for different types of fuel. In block 404, it is determined how to control the heat flow on the basis of the information acquired in blocks 400 and 402. In particular, it is determined whether to perform the control according to the current heat demand (block 408) or to control the heat flow against the current heat demand (block 406). Block 406 may include either pumping more heat into the heat reservoirs (increase the heat flow above the current demand) or exploiting the heat currently stored in the heat reservoirs (decrease the heat flow above the current demand).

A downstream controller executing the process of Figure 4 may report its decisions (block 406 and 408) and/or determined heat storage capacity profile to the server and/or directly to the upstream controllers. As a consequence, an upstream controller becomes aware of the decisions made downstream and can then take the decision into account when executing the process of Figure 4. The decision may be acquired in block 402. In this manner, each controller learns the behaviour of the downstream controllers, and cohesion in the operation of the whole system can be achieved. For example, the controller 304 may receive the information from all downstream controllers, i.e. the controllers 306 performing the room or apartment-based control. Similarly, the controller 302 receives regional information from all controllers 304 located at heat distribution centres 120, 122 in a region of the regional controller 302. And further, the controller 300 at the heat generator receives information that encompasses the whole heat delivery system. At least some of the controllers may also affect the decisions made by at least some of the other controllers. For example, the controllers may form a hierarchical structure where an upstream controller may control decisions made by one or more controllers downstream from it. The control may include signalling, from the upstream controller to the downstream controller, a control command affecting the heat flow control at the downstream controller.

In an embodiments, the controllers are configured to store first information on the heat distribution network to the database 312, to retrieve second information on the heat distribution network from the database 312, and to use the second information when controlling the flow of the heat stream. Figures 5A to 5C illustrate some embodiments of the first and second information for the controllers 300 to 306.

Referring to Figure 5A, the controller 306 controlling the heat flow in a room or such a limited space within the heated site, e.g. a building, may acquire measurement data on area where it controls the heat flow, e.g. the room, and store the measurement data in the database as the first information. As described above, the controller may accumulate the measurement data and compute the heat storage capacity of the area on the basis of the measurement data and store the heat storage capacity as the first information. The measurement data may include at least the temperature in the area, outlet heat flow (e.g. in terms of a position of a heat flow control valve), and outside/external temperature. Yet another parameter may be a target temperature for the heat flow control. The measurement data may include at least one parameter that enables determination of heat outlet to the area and at least one parameter that enables determination of the area's response to the heat outlet, e.g. the area temperature. The outside temperature and other corresponding parameters may be used for determining current conditions for the heat storage capacity.

Further as described above, the controller may compute the heat storage capacity under one or more various conditions, thus forming the heat storage capacity profile for the area in the database. The controller 306 may update the heat storage capacity profile as new measurement data becomes available. Accordingly, the measurements may be carried out regularly so that the heat storage capacity is adaptive to the changing conditions.

As another example of the first information, the controller 306 may monitor the operation of the heat delivery system and send an alarm upon detecting an anomaly in the operation, such as a malfunction. A malfunction may be detected, for example, if the measured temperature does not change as a response to the adjustment of the heat flow. Such alarms or other notifications based on detected events may be transmitted to the server as the first information.

In an embodiment, the controller 306 stores heat demand over time and learns any patterns in the heat demand. Such a heat demand profile may be used as an input parameter in block 402.

As the second information, the controller 306 may acquire from the server 310 information that enables prediction of the future heat demand, e.g. the parameter(s) acquired in block 402. Other information may be acquired as well, e.g. information on the other controllers or other locations in the heat distribution network.

Referring to Figure 5B, the controllers 302, 304 associated with the intermediate locations of the heat delivery network, i.e. between the heat generator and the final heat flow control point 306, may store different first information and acquire different second information. In the heat distribution centre 120, 122 and in the substation(s) 110, at least the following parameters may be measured and used as the first information: outlet temperature and/or outlet pressure/flow of the heat stream output from the location downstream, inlet temperature and/or inlet pressure/flow of a heat stream received at the location from downstream, outlet temperature and/or outlet pressure/flow of the heat stream output from the location upstream, inlet temperature and/or inlet pressure/flow of a heat stream received at the location from upstream. In other words, the inlet and outlet parameters may be measured to all incoming and outgoing heat streams.

As described above, the controller 302, 304 may accumulate the measurement data and compute the heat storage capacity of at least the part of heat distribution network where the heat stream travels, e.g. the area between the controller and the next controller downstream. Each substation, and the heat distribution centre, may include a heat exchanger that exchanges the heat between two pipe networks: one upstream of the heat exchanger and one downstream. In other words, the heat transmission medium from the substation 110 travels to the substation 120 and back. Accordingly, the controller 302 may compute the heat storage capacity of the heat distribution network between the locations 110 and 120 on the basis of the measurement data and store the heat storage capacity as the first information. In this case, location 120 may be understood to encompass all the sites downstream from the substation 110.

The controller 304 at the heat distribution centre may be considered as an exception because the room-based heat flow control is within the same pipe network as the controller 304. Accordingly, the controller 304 at the heat distribution centre may be configured to measure the heat storage capacity for the whole building on the basis of the measurement data. For example, the controller 304 at the heat distribution centre may gather measurement data from the room-based measurements that enables building the heat storage capacity profile for the whole site, e.g. the building. In other words, the heat storage capacities computed and/or measurement data acquired by the controller 306 and other controllers in the same site (building) may be aggregated by the controller 304 to form the heat storage capacity for the whole site. The controller 304 may employ further measurement data to supplement the aggregated measurement data, wherein the further measurement may represent a heat consumption profile of the building/site. The heat consumption profile may, in addition to the heating of the rooms, take into account other heating such as hot water heating. As a consequence, the heat storage capacity profile is improved. In a similar manner, the controller 302 may aggregate the heat storage capacities computed by the controller 304 and other corresponding controllers in the other sites in the region controlled by the controller 302. In this manner, the controller 302 may acquire the heat storage capacity of the region it controls. The controller 302 may further add to the heat storage profile the measurement data measured from the heat distribution network between the locations 110 and 120, 122. In this manner, a broader heat storage capacity may be employed in the control.

The measurement data may further include the outside/external temperature and/or temperature of the outlet heat flow (e.g. in terms of a position of a heat flow control valve). Yet another parameter may be a target temperature for the heat flow control, e.g. a target temperature for the downstream outlet temperature.

Further as described above, the controller 302, 304 may compute the heat storage capacity under one or more various conditions, thus forming the heat storage capacity profile for the measured area in the database. The controller 302, 304 may update the heat storage capacity profile as new measurement data becomes available. Accordingly, the measurements may be carried out regularly so that the heat storage capacity is adaptive to the changing conditions.

As another example of the first information, the controller 302, 304 may monitor the operation of the heat delivery system and send an alarm upon detecting an anomaly in the operation, such as a malfunction. Such alarms or other notifications based on detected events may be transmitted to the server as the first information.

In an embodiment, the controller 302, 304 stores heat demand over time and learns any patterns in the heat demand. Such a heat demand profile may be used as an input parameter in block 402.

As the second information, the controller 302, 304 may acquire from the server 310 information that enables prediction of the future heat demand, e.g. the parameter(s) acquired in block 402. The second information may include the heat storage capacity stored in the database by other controllers 306 downstream of the controller 302, 304. Then, the controller may combine the heat storage capacities of the different parts of the heat delivery network, thus building an aggregated heat storage capacity profile for the heat distribution network downstream of the controller. Such an aggregated profile is more accurate than a profile computed only on the basis of the measurements made at the location of the controller 302, 304. Other information may be acquired as well, e.g. information on the other controllers or other locations in the heat distribution network.

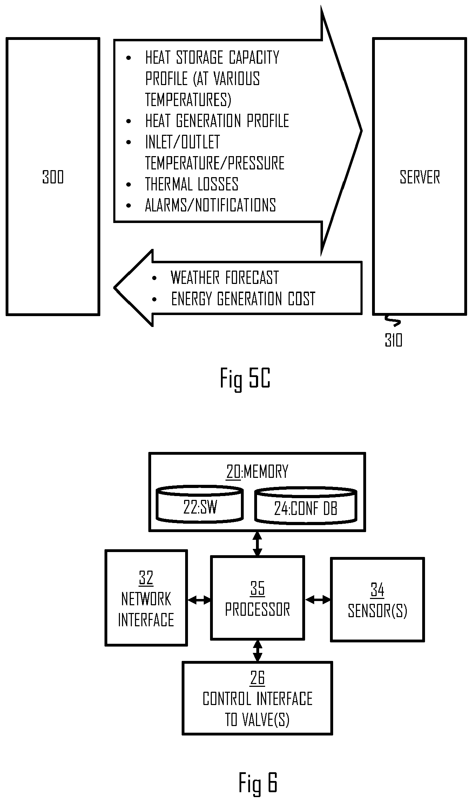

Referring to Figure 5C, the controller 300 associated with the location of the heat generator may store yet different first information and acquire yet different second information. In the heat generator, at least the following parameters may be measured and used as the first information: outlet temperature and/or outlet pressure of the heat stream output from the location downstream, inlet temperature and/or inlet pressure of a heat stream received at the location from downstream, a position of an outlet shunt valve, heat storage capacity of heat reservoirs available at the heat generator, and operational parameters of pump(s) at the heat generator or in the heat delivery system in general. Corresponding heat reservoirs may be provided elsewhere in the heat distribution networks and take into account when building the heat storage capacity profiles at the controllers 302, 304.

As described above, the controller 300 may accumulate the measurement data and compute the heat storage capacity of at least the part of heat distribution network where the heat stream travels, e.g. the area between the controller 300 and the next controller 302 downstream.

The measurement data may further include the outside/external temperature and/or the outlet heat flow (e.g. in terms of a position of the shunt valve).

Further as described above, the controller 300 may compute the heat storage capacity under one or more various conditions, thus forming the heat storage capacity profile for the measured area in the database. The controller 300 may update the heat storage capacity profile as new measurement data becomes available. Accordingly, the measurements may be carried out regularly so that the heat storage capacity is adaptive to the changing conditions.

As another example of the first information, the controller 300 may monitor the operation of the heat delivery system and send an alarm upon detecting an anomaly in the operation, such as a malfunction. Such alarms or other notifications based on detected events may be transmitted to the server as the first information.

In an embodiment, the controller 300 stores heat demand over time and learns any patterns in the heat demand. Such a heat demand profile may be used as an input parameter in block 402.

As yet another example of the first information, the controller 300 may analyse the measurement data and compute thermal losses at the heat generator and at the heat delivery network on the basis of the measurement data. The thermal losses may be then taken into account when controlling the heat generation.

As the second information, the controller 300 may acquire from the server 310 information that enables prediction of the future heat demand, e.g. the parameter(s) acquired in block 402. The second information may include the heat storage capacity stored in the database by other controllers 302 to 306 downstream of the controller 300. Then, the controller 300 may combine the heat storage capacities of the different parts of the heat delivery network, thus building an aggregated heat storage capacity profile for the whole heat delivery network, for example. Such an aggregated profile is more accurate than a profile computed only on the basis of the measurements made at the location of the controller 300. The aggregated profile may take into account the thermal losses as well. The aggregated profile may then be used in adjusting the heat generation at the heat generator and heat outlet from the heat generator. Other information may be acquired as well, e.g. information on the other controllers or other locations in the heat distribution network.

The controllers may employ, as the second information, the energy generation costs and use the energy generation costs as an input to block 404. The energy generation costs may be combined with the predicted heat demand to derive the most efficient plan for the heat control. For example, if it is predicted that the heat demand will increase but that the heat generation cost profile shows that the heat generation costs decrease, the controller(s) may maintain the current heat flow or even decrease the heat flow so as to focus the heat generation to times when the heat generation is less costly. Various optimization algorithms may be used that prioritize the heat generation costs and/or the heat demand estimates.

Figure 6 illustrates a block diagram of an embodiment of an apparatus for a controller 300 to 306 configured to execute block 200 or 202. The apparatus may be an electronic device comprising electronic circuitries for realizing some embodiments of the present invention.

The apparatus may comprise at least one processor 35 and at least one memory 20 storing one or more computer program products 22 configuring the operation of said processor(s). The memory 20 may further store a configuration database 24 storing operational configurations of the apparatus, e.g. the heat storage profiles used in the heat flow control. The apparatus may comprise or be connected to one or more sensors 34 configured to measure the above-described parameters at the area controlled by the controller. The sensors may include at least one temperature sensor, at least one flow sensor for measuring the inlet/outlet pressure, etc. The apparatus may comprise a network adapter or a network interface 32 configured to provide the access to the server computer and the database. The network interface may support a wireless or a wired communication protocol for establishing transport control protocol / internet protocol (TCP/IP) or a similar connection with the server. The apparatus may further comprise a control interface 26 for controlling one or more valves at the location of the controller. If the apparatus is for the controller 300, the control interface 26 may further comprise an interface to control the heat generation at the heat generator.

The processor 35 may be implemented by one or more of the following: (a) a hardware-only circuit implementation such as an implementation in only analog and/or digital circuitry; (b) a combination of circuits and software and/or firmware, such as (as applicable): (i) a combination of processor(s) or processor cores; or (ii) portions of processor(s)/software including digital signal processor(s), software, and at least one memory that work together to cause the apparatus to perform the embodiments; and (c) circuits, such as a microprocessor(s) or a portion of a microprocessor(s), that require software or firmware for operation, even if the software or firmware is not physically present.

The processes or methods described in connection with Figures 2 and 4 may also be carried out in the form of one or more computer processes defined by one or more computer programs. A separate computer program may be provided in one or more apparatuses that execute functions of the processes described in connection with the Figures. The computer program(s) may be in source code form, object code form, or in some intermediate form, and it may be stored in some sort of carrier, which may be any entity or device capable of carrying the program. Such carriers include transitory and/or non-transitory computer media, e.g. a record medium, computer memory, read-only memory, electrical carrier signal, telecommunications signal, and software distribution package. Depending on the processing power needed, the computer program may be executed in a single electronic digital processing unit or it may be distributed amongst a number of processing units.

The invention is applicable to the above-described heat delivery systems but also other heat delivery systems. The same principles are directly applicable to cooling systems as well. Therefore, the terms heat delivery system, heat stream etc. shall be understood to cover systems/streams that heat the site or cool the site. For example, the above-described embodiments where the heat flow is reduced below the heat demand actually cool the sites. In the cooling systems, the heat transmission medium is typically liquid. The technology advances and, therefore, all words and expressions should be interpreted broadly, and they are intended to illustrate, not to restrict, the described embodiments. It will be obvious to a person skilled in the art that, as technology advances, the inventive concept can be implemented in various ways. Embodiments are not limited to the examples described above but may vary within the scope of the claims.

## Claims

1. A system for controlling delivery of a heat stream from a heat generator (100) to one or more sites to be heated (130, 132), comprising:
a first controller (300) configured for controlling (200) an outlet flow of the heat stream at a location of a heat generator (100) of a heat distribution network, configured to acquire measurement data indicative of a first heat storage capacity profile of the heat distribution network downstream from the location of the heat generator, to generate the first heat storage capacity profile on the basis of the measurement data and transmit the first heat storage capacity profile to a server computer, to acquire information on a first heat demand of the heat distribution network downstream from the location of the heat generator, and to employ the first heat storage capacity profile when controlling the outlet flow of the heat stream from the heat generator to meet the first heat demand;
a second controller (302) configured for controlling (202) an outlet flow of the heat stream at a location of a regional substation (110) of a heat distribution network, downstream of the location of the heat generator and the regional substation arranged to supply heat distribution centres (120, 122) of real estates, configured to acquire measurement data indicative of a second heat storage capacity profile of the heat distribution network downstream from the location of the regional substation, to generate the second heat storage capacity profile on the basis of the measurement data and transmit the second heat storage capacity profile to the server computer, to acquire information on a second heat demand of the heat distribution network downstream from the location of the regional substation, and to employ the second heat storage capacity profile when controlling the flow of the heat stream to meet the second heat demand; and
a third controller (304, 306) configured for controlling flow of the heat stream at a further location, downstream of the location of the regional substation, configured to acquire measurement data indicative of a third heat storage capacity profile of the heat distribution network downstream from the further location, to generate the third heat storage capacity profile on the basis of the measurement data and transmit the third heat storage capacity profile to a server computer, to acquire information on a third heat demand of the heat distribution network downstream from the further location, and to employ the third heat storage capacity profile when controlling the flow of the heat stream to meet the third heat demand, wherein the third controller is configured to control heating of one or more rooms in a real estate that is a site to be heated.

2. The system of claim 1, wherein at least one of the first controller and the second controller is configured to predict decrease in the heat demand and to reduce (406) the flow of the heat stream in response to the predicted decrease before the heat demand actually decreases.

3. The system of any preceding claim, wherein at least one of the first controller and the second controller is configured to predict increase in the heat demand and to increase (406) the flow of the heat stream in response to the predicted increase before the heat demand actually increases.

4. The system of claim 2 or 3, wherein the at least one of the first controller and the second controller is configured acquire weather forecast information to predict the change in the heat demand on the basis of the weather forecast information.

5. The system of any preceding claim, further comprising a server computer (310) configured to store a database (312) storing information on the heat distribution network, wherein the server computer is accessible to the first controller and the second controller, and wherein the first controller and the second controller are configured to store first information on the heat distribution network to the database, to receive second information on the heat distribution network from the database and to use the second information when controlling the flow of the heat stream.

6. The system of claim 5, further comprising a first measurement device configured to measure the first heat storage capacity profile at the first location on the basis of at least the following parameters: outlet temperature and outlet flow of the heat stream output from the first location downstream; inlet temperature and inlet flow of a heat stream received at the first location from downstream, and to store the measured first heat storage capacity profile in the database; and
a second measurement device configured to measure the second heat storage capacity profile at the second location on the basis of at least the following parameters: outlet temperature and outlet flow of the heat stream output from the second location downstream; inlet temperature and inlet flow of a heat stream received at the second location from downstream, and to store the measured second heat storage capacity profile in the database.

7. The system of claim 6, wherein the first measurement device and the second measurement device are configured to measure the respective first heat storage capacity profile and the second heat storage capacity profile at various values of the heat demand.

8. The system of claim 1, wherein the third controller is configured to determine a target temperature and to control the heat flow to meet the target temperature and, further, to define at least partially the second heat demand for the second controller on the basis of the target temperature.

9. The system of any preceding claim, wherein the first controller (300) is configured to control outlet of a heat generator (100), to determine a heat generation level on the basis of at least the first heat storage capacity profile, a future estimate of the first heat demand, and a heat generation cost profile.

10. A computer-implemented method for controlling delivery of a heat stream from a heat generator to one or more sites, comprising:
controlling (200) outlet flow of the heat stream at a location of a heat generator (100) of a heat distribution network by acquiring measurement data indicative of a first heat storage capacity profile of the heat distribution network downstream from the location of the heat generator, by acquiring information on a first heat demand of the heat distribution network downstream from the location of the heat generator, and by employing the first heat storage capacity profile when controlling the outlet flow of the heat stream from the heat generator to meet the first heat demand;
controlling (202) an outlet flow of the heat stream at a location of a regional substation (110) of the heat distribution network, downstream of the location of the heat generator and the regional substation arranged to supply heat distribution centres (120, 122) of real estates, by acquiring measurement data indicative of a second heat storage capacity profile of the heat distribution network downstream from the location of the regional substation, by acquiring information on a second heat demand of the heat distribution network downstream from the location of the regional substation, and by employing the second heat storage capacity profile when controlling the flow of the heat stream from the regional substation to meet the second heat demand; and
controlling flow of the heat stream at a further location of the heat distribution network, downstream of the location of the regional substation, by acquiring measurement data indicative of a third heat storage capacity profile of the heat distribution network downstream from the further location, by acquiring information on a third heat demand of the heat distribution network downstream from the further location, and by employing the third heat storage capacity profile when controlling the flow of the heat stream to meet the third heat demand, wherein the further location is at a location of one or more rooms in a real estate.

## Patentansprüche

1. System zum Steuern der Zufuhr eines Wärmestroms von einem Wärmeerzeuger (100) zu einem oder mehreren zu heizenden Orten (130, 132), das Folgendes umfasst:
eine erste Steuerung (300), die zum Steuern (200) eines Auslassflusses des Wärmestroms an einem Standort eines Wärmeerzeugers (100) eines Wärmeverteilungsnetzwerks ausgelegt ist, dazu ausgelegt, Messdaten zu erfassen, die ein erstes Wärmespeicherkapazitätsprofil des Wärmeverteilungsnetzwerks stromabwärts vom Standort des Wärmeerzeugers anzeigen, das erste Wärmespeicherkapazitätsprofil auf Basis der Messdaten zu erzeugen und das erste Wärmespeicherkapazitätsprofil zu einem Servercomputer zu übertragen, Informationen eines ersten Wärmebedarfs des Wärmeverteilungsnetzwerks stromabwärts vom Standort des Wärmeerzeugers zu erfassen und das erste Wärmespeicherkapazitätsprofil beim Steuern des Auslassflusses des Wärmestroms vom Wärmeerzeuger einzusetzen, um den ersten Wärmebedarf zu erfüllen;
eine zweite Steuerung (302) die zum Steuern (202) eines Auslassflusses des Wärmestroms an einem Standort einer regionalen Unterstation (110) eines Wärmeverteilungsnetzwerks stromabwärts vom Standort des Wärmeerzeugers und der regionalen Unterstation, die angeordnet ist, Wärmeverteilungszentren (120, 122) von Immobilien zu versorgen, ausgelegt ist, dazu ausgelegt, Messdaten zu erfassen, die ein zweites Wärmespeicherkapazitätsprofil des Wärmeverteilungsnetzwerks stromabwärts vom Standort der regionalen Unterstation anzeigen, das zweite Wärmespeicherkapazitätsprofil auf Basis der Messdaten zu erzeugen und das zweite Wärmespeicherkapazitätsprofil zum Servercomputer zu übertragen, Informationen über einen zweiten Wärmebedarf des Wärmeverteilungsnetzwerks stromabwärts vom Standort der regionalen Unterstation zu erfassen und das zweite Wärmespeicherkapazitätsprofil beim Steuern des Flusses des Wärmestroms einzusetzen, um den zweiten Wärmebedarf zu erfüllen; und
eine dritte Steuerung (304, 306), die zum Steuern des Flusses des Wärmestroms an einem weiteren Standort stromabwärts vom Standort der regionalen Unterstation, ausgelegt ist, dazu ausgelegt, Messdaten zu erfassen, die ein drittes Wärmespeicherkapazitätsprofil des Wärmeverteilernetzwerks stromabwärts vom weiteren Standort anzeigen, das dritte Wärmespeicherkapazitätsprofil auf Basis der Messdaten zu erzeugen und das dritte Wärmespeicherkapazitätsprofil zu einem Servercomputer zu übertragen, Informationen über einen dritten Wärmebedarf des Wärmeverteilungsnetzwerks stromabwärts vom weiteren Standort zu erfassen und das dritte Wärmespeicherkapazitätsprofil beim Steuern des Flusses des Wärmestroms einzusetzen, um den dritten Wärmebedarf zu erfüllen, wobei die dritte Steuerung dazu ausgelegt ist, die Heizung von einem oder mehreren Räumen in einer Immobilie, die ein zu heizender Ort ist, zu steuern.

2. System nach Anspruch 1, wobei mindestens eine der ersten Steuerung und der zweiten Steuerung dazu ausgelegt ist, eine Verringerung des Wärmebedarfs vorherzusagen und in Reaktion auf die vorhergesagte Verringerung den Fluss des Wärmestroms zu reduzieren (406), bevor sich der Wärmebedarf tatsächlich verringert.

3. System nach einem der vorhergehenden Ansprüche, wobei mindestens eine der ersten Steuerung und der zweiten Steuerung dazu ausgelegt ist, eine Erhöhung des Wärmebedarfs vorherzusagen und in Reaktion auf die vorhergesagte Erhöhung den Fluss des Wärmestroms zu erhöhen (406), bevor sich der Wärmebedarf tatsächlich erhöht.

4. System nach Anspruch 2 oder 3, wobei mindestens eine der ersten Steuerung und der zweiten Steuerung dazu ausgelegt ist, Wettervorhersageinformationen zu erfassen, um die Änderung des Wärmebedarfs auf Basis der Wettervorhersageinformationen vorherzusagen.

5. System nach einem der vorhergehenden Ansprüche, das ferner einen Servercomputer (310) umfasst, der dazu ausgelegt ist, eine Datenbank (312) zu speichern, in der Informationen über das Wärmeverteilungsnetzwerk gespeichert sind, wobei die erste Steuerung und die zweite Steuerung Zugriff auf den Servercomputer haben, und wobei die erste Steuerung und die zweite Steuerung dazu ausgelegt sind, Informationen über das Wärmeverteilungsnetzwerk in der Datenbank zu speichern, zweite Informationen über das Wärmeverteilungsnetzwerk aus der Datenbank zu empfangen und die zweiten Informationen beim Steuern des Flusses des Wärmestroms zu verwenden.

6. System nach Anspruch 5, das ferner eine erste Messvorrichtung umfasst, die dazu ausgelegt ist, das erste Wärmespeicherkapazitätsprofil am ersten Standort auf Basis mindestens der folgenden Parameter zu messen: Auslasstemperatur und Auslassfluss des Wärmestroms, der vom ersten Standort stromabwärts ausgegeben wird; Einlasstemperatur und Einlassfluss eines Wärmestroms, der am ersten Standort von stromabwärts empfangen wird, und das gemessene erste Wärmespeicherkapazitätsprofil in der Datenbank zu speichern; und
eine zweite Messvorrichtung, die dazu ausgelegt ist, das zweite Wärmespeicherkapazitätsprofil am zweiten Standort auf Basis mindestens der folgenden Parameter zu messen: Auslasstemperatur und Auslassfluss des Wärmestroms, der vom zweiten Standort stromabwärts ausgegeben wird; Einlasstemperatur und Einlassfluss eines Wärmestroms, der am zweiten Standort von stromabwärts empfangen wird, und das gemessene zweite Wärmespeicherkapazitätsprofil in der Datenbank zu speichern.

7. System nach Anspruch 6, wobei die erste Messvorrichtung und die zweite Messvorrichtung dazu ausgelegt sind, das erste Wärmespeicherkapazitätsprofil bzw. das zweite Wärmespeicherkapazitätsprofil bei verschiedenen Werten des Wärmebedarfs zu messen.

8. System nach Anspruch 1, wobei die dritte Steuerung dazu ausgelegt ist, eine Solltemperatur zu bestimmen und den Wärmestrom zu steuern, um die Solltemperatur zu erfüllen, und ferner mindestens teilweise den zweiten Wärmebedarf für die zweite Steuerung auf Basis der Solltemperatur zu definieren.

9. System nach einem der vorhergehenden Ansprüche, wobei die erste Steuerung (300) dazu ausgelegt ist, einen Auslass eines Wärmeerzeugers (100) zu steuern, ein Wärmeerzeugungsniveau auf Basis mindestens des ersten Wärmespeicherkapazitätsprofils, einer künftigen Schätzung des ersten Wärmebedarfs und eines Wärmeerzeugungskostenprofils zu bestimmen.

10. Computerimplementiertes Verfahren zum Steuern der Zufuhr eines Wärmestroms von einem Wärmeerzeuger zu einem oder mehreren Orten, das Folgendes umfasst:
Steuern (200) eines Auslassflusses des Wärmestroms an einem Standort eines Wärmeerzeugers (100) eines Wärmeverteilungsnetzwerks durch Erfassen von Messdaten, die ein erstes Wärmespeicherkapazitätsprofil des Wärmeverteilungsnetzwerks stromabwärts vom Standort des Wärmeerzeugers anzeigen, durch Erfassen von Informationen eines ersten Wärmebedarfs des Wärmeverteilungsnetzwerks stromabwärts vom Standort des Wärmeerzeugers und durch Einsetzen des ersten Wärmespeicherkapazitätsprofils beim Steuern des Auslassflusses des Wärmestroms vom Wärmeerzeuger, um den ersten Wärmebedarf zu erfüllen;
Steuern (202) eines Auslassflusses des Wärmestroms an einem Standort einer regionalen Unterstation (110) des Wärmeverteilungsnetzwerks stromabwärts vom Standort des Wärmeerzeugers und der regionalen Unterstation, die angeordnet ist, Wärmeverteilungszentren (120, 122) von Immobilien zu versorgen, durch Erfassen von Messdaten, die ein zweites Wärmespeicherkapazitätsprofil des Wärmeverteilungsnetzwerks stromabwärts vom Standort der regionalen Unterstation anzeigen, durch Erfassen von Informationen über einen zweiten Wärmebedarf des Wärmeverteilungsnetzwerks stromabwärts vom Standort der regionalen Unterstation und durch Einsetzen des zweiten Wärmespeicherkapazitätsprofils beim Steuern des Flusses des Wärmestroms von der regionalen Unterstation, um den zweiten Wärmebedarf zu erfüllen; und
Steuern des Flusses des Wärmestroms an einem weiteren Standort des Wärmeverteilungsnetzwerks stromabwärts vom Standort der regionalen Unterstation durch Erfassen von Messdaten, die ein drittes Wärmespeicherkapazitätsprofil des Wärmeverteilernetzwerks stromabwärts vom weiteren Standort anzeigen, durch Erfassen von Informationen über einen dritten Wärmebedarf des Wärmeverteilungsnetzwerks stromabwärts vom weiteren Standort und durch Einsetzen des dritten Wärmespeicherkapazitätsprofils beim Steuern des Flusses des Wärmestroms, um den dritten Wärmebedarf zu erfüllen, wobei sich der weitere Standort an einem Standort von einem oder mehreren Räumen in einer Immobilie befindet.

## Revendications

1. Système pour commander la distribution d'un flux de chaleur d'un générateur de chaleur (100) à un ou plusieurs sites à chauffer (130, 132), comprenant :
un premier dispositif de commande (300) configuré pour commander (200) un écoulement à la sortie du flux de chaleur à un emplacement d'un générateur de chaleur (100) d'un réseau de diffusion de chaleur, configuré pour acquérir des données de mesure indicatives d'un premier profil de capacité de stockage de chaleur du réseau de diffusion de chaleur en aval de l'emplacement du générateur de chaleur, pour générer le premier profil de capacité de stockage de chaleur sur la base des données de mesure et transmettre le premier profil de capacité de stockage de chaleur à un ordinateur serveur, pour acquérir des informations sur une première demande de chaleur du réseau de diffusion de chaleur en aval de l'emplacement du générateur de chaleur, et pour employer le premier profil de capacité de stockage de chaleur lors de la commande de l'écoulement à la sortie du flux de chaleur depuis le générateur de chaleur pour répondre à la première demande de chaleur ;
un deuxième dispositif de commande (302) configuré pour commander (202) un écoulement à la sortie du flux de chaleur à un emplacement d'une sous-station régionale (110) d'un réseau de diffusion de chaleur en aval de l'emplacement du générateur de chaleur, la sous-station régionale étant agencée pour alimenter des centres de diffusion de chaleur (120, 122) de biens immobiliers, configuré pour acquérir des données de mesure indicatives d'un deuxième profil de capacité de stockage de chaleur du réseau de diffusion de chaleur en aval de l'emplacement de la sous-station régionale, pour générer le deuxième profil de capacité de stockage de chaleur sur la base des données de mesure et transmettre le deuxième profil de capacité de stockage de chaleur à l'ordinateur serveur, pour acquérir des informations sur une deuxième demande de chaleur du réseau de diffusion de chaleur en aval de l'emplacement de la sous-station régionale, et pour employer le deuxième profil de capacité de stockage de chaleur lors de la commande de l'écoulement du flux de chaleur pour répondre à la deuxième demande de chaleur ; et
un troisième dispositif de commande (304, 306) configuré pour commander un écoulement du flux de chaleur à un autre emplacement en aval de l'emplacement de la sous-station régionale, configuré pour acquérir des données de mesure indicatives d'un troisième profil de capacité de stockage de chaleur du réseau de diffusion de chaleur en aval de l'autre emplacement, pour générer le troisième profil de capacité de stockage de chaleur sur la base des données de mesure et transmettre le troisième profil de capacité de stockage de chaleur à un ordinateur serveur, pour acquérir des informations sur une troisième demande de chaleur du réseau de diffusion de chaleur en aval de l'autre emplacement, et pour employer le troisième profil de capacité de stockage de chaleur lors de la commande de l'écoulement du flux de chaleur pour répondre à la troisième demande de chaleur, dans lequel le troisième dispositif de commande est configuré pour commander le chauffage d'une ou plusieurs pièces dans un bien immobilier qui est un site à chauffer.

2. Système selon la revendication 1, dans lequel au moins un parmi le premier dispositif de commande et le deuxième dispositif de commande est configuré pour prédire une diminution de la demande de chaleur et pour réduire (406) l'écoulement du flux de chaleur en réponse à la diminution prédite avant que la demande de chaleur ne diminue réellement.

3. Système selon l'une quelconque des revendications précédentes, dans lequel au moins un parmi le premier dispositif de commande et le deuxième dispositif de commande est configuré pour prédire une augmentation de la demande de chaleur et pour augmenter (406) l'écoulement du flux de chaleur en réponse à l'augmentation prédite avant que la demande de chaleur n'augmente réellement.

4. Système selon la revendication 2 ou 3, dans lequel le au moins un parmi le premier dispositif de commande et le deuxième dispositif de commande est configuré pour acquérir des informations de prévision météorologique pour prédire le changement de la demande de chaleur sur la base des informations de prévision météorologique.

5. Système selon l'une quelconque des revendications précédentes, comprenant en outre un ordinateur serveur (310) configuré pour stocker une base de données (312) stockant des informations sur le réseau de diffusion de chaleur, dans lequel l'ordinateur serveur est accessible au premier dispositif de commande et au deuxième dispositif de commande, et dans lequel le premier dispositif de commande et le deuxième dispositif de commande sont configurés pour stocker des premières informations sur le réseau de diffusion de chaleur dans la base de données, pour recevoir des deuxièmes informations sur le réseau de diffusion de chaleur de la base de données et pour utiliser les deuxièmes informations lors de la commande de l'écoulement du flux de chaleur.

6. Système selon la revendication 5, comprenant en outre un premier dispositif de mesure configuré pour mesurer le premier profil de capacité de stockage de chaleur au premier emplacement, au moins sur la base des paramètres suivants : une température de sortie et un écoulement à la sortie du flux de chaleur délivré par le premier emplacement en aval ; une température d'entrée et un écoulement à l'entrée d'un flux de chaleur reçu au premier emplacement depuis l'aval, et pour stocker le premier profil de capacité de stockage de chaleur mesuré dans la base de données ; et
un deuxième dispositif de mesure configuré pour mesurer le deuxième profil de capacité de stockage de chaleur au deuxième emplacement au moins sur la base des paramètres suivants : une température de sortie et un écoulement à la sortie du flux de chaleur délivré par le deuxième emplacement en aval ; une température d'entrée et un écoulement à l'entrée d'un flux de chaleur reçu au deuxième emplacement de l'aval, et pour stocker le deuxième profil de capacité de stockage de chaleur mesuré dans la base de données.

7. Système selon la revendication 6, dans lequel le premier dispositif de mesure et le deuxième dispositif de mesure sont configurés pour mesurer le premier profil de capacité de stockage de chaleur et le deuxième profil de capacité de stockage de chaleur respectifs à diverses valeurs de la demande de chaleur.

8. Système selon la revendication 1, dans lequel le troisième dispositif de commande est configuré pour déterminer une température cible et pour commander l'écoulement de chaleur pour répondre à la température cible, et pour définir en outre au moins partiellement la deuxième demande de chaleur pour le deuxième dispositif de commande sur la base de la température cible.

9. Système selon l'une quelconque des revendications précédentes, dans lequel le premier dispositif de commande (300) est configuré pour commander la sortie d'un générateur de chaleur (100), pour déterminer un niveau de génération de chaleur au moins sur la base du premier profil de capacité de stockage de chaleur, d'une estimation future de la première demande de chaleur et d'un profil de coût de génération de chaleur.

10. Procédé mis en œuvre par ordinateur pour commander la distribution d'un flux de chaleur d'un générateur de chaleur à un ou plusieurs sites, comprenant :
la commande (200) d'un écoulement à la sortie du flux de chaleur à un emplacement d'un générateur de chaleur (100) d'un réseau de diffusion de chaleur en acquérant des données de mesure indicatives d'un premier profil de capacité de stockage de chaleur du réseau de diffusion de chaleur en aval de l'emplacement du générateur de chaleur, en acquérant des informations sur une première demande de chaleur du réseau de diffusion de chaleur en aval de l'emplacement du générateur de chaleur, et en employant le premier profil de capacité de stockage de chaleur lors de la commande de l'écoulement à la sortie du flux de chaleur depuis le générateur de chaleur pour répondre à la première demande de chaleur ;
la commande (202) d'un écoulement à la sortie du flux de chaleur à un emplacement d'une sous-station régionale (110) du réseau de diffusion de chaleur en aval de l'emplacement du générateur de chaleur, la sous-station régionale étant agencée pour alimenter des centres de diffusion de chaleur (120, 122) de biens immobiliers, en acquérant des données de mesure indicatives d'un deuxième profil de capacité de stockage de chaleur du réseau de diffusion de chaleur en aval de l'emplacement de la sous-station régionale, en acquérant des informations sur une deuxième demande de chaleur du réseau de diffusion de chaleur en aval de l'emplacement de la sous-station régionale, et en employant le deuxième profil de capacité de stockage de chaleur lors de la commande de l'écoulement du flux de chaleur depuis la sous-station régionale pour répondre à la deuxième demande de chaleur ; et
la commande d'un écoulement du flux de chaleur à un autre emplacement du réseau de diffusion de chaleur, en aval de l'emplacement de la sous-station régionale, en acquérant des données de mesure indicatives d'un troisième profil de capacité de stockage de chaleur du réseau de diffusion de chaleur en aval de l'autre emplacement, en acquérant des informations sur un troisième demande de chaleur du réseau de diffusion de chaleur en aval de l'autre emplacement, et en employant le troisième profil de capacité de stockage de chaleur lors de la commande de l'écoulement du flux de chaleur pour répondre à la troisième demande de chaleur, dans lequel l'autre emplacement se trouve à un emplacement d'une ou plusieurs pièces dans un bien immobilier.
